# EUROPÄISCHE PATENTSCHRIFT

(11) **EP 0 388 780 B1**
(45) Veröffentlichungstag und Bekanntmachung des Hinweises auf die Patenterteilung: **16.06.1993**
(21) Anmeldenummer: 90104862.9
(22) Anmeldetag: 15.03.1990
(51) Int. Cl.: A61C 5/10, A61C 5/08, A61C 11/00

(54) **Verfahren zur Herstellung eines Zahnersatzteils, wie Krone oder Brücke, sowie Artikulator und Kauschablone zur Durchführung des Verfahrens**
Process for the preparation of a dental spare part, such as a crown or bridge, and an articulator and masticatory model for carrying out the process
Procédé de fabrication de dents artificielles telles que couronne ou pont dentaires ainsi qu'articulateur et modèle masticateur

(30) Priorität: 23.03.1989 DE 3909655
(43) Veröffentlichungstag der Anmeldung: 26.09.1990
(73) Patentinhaber: Neunhoeffer, Horst, Dr., Zahnarzt, I-39037 Mühlbach (Bz) (IT)
(72) Erfinder: Neunhoeffer, Horst, Dr., Zahnarzt, I-39037 Mühlbach (Bz)/IT (IT); Rümke, Reinhardt, I-39026 Prad am Stj. (IT)
(74) Vertreter: Fay, Hermann, Dipl.-Phys. Dr.

(56) Entgegenhaltungen:
- EP-A- 0 054 600
- EP-A- 0 074 527
- WO-A-83/00431
- DE-A- 3 347 830
- DE-C- 3 505 730

## Beschreibung

Die Erfindung betrifft ein Verfahren zur Herstellung eines Zahnersatzteils, wie Krone oder Brücke, wobei mittels eines Abdrucks im Munde ein Arbeitsmodell hergestellt wird, das - nach üblichen Beschleifmaßnahmen an Pfeilerzähnen - die aktuelle Situation des mit dem Zahnersatzteil auszustattenden Kiefers darstellt, und wobei auf dem Arbeitsmodell eine Modellation des Zahnersatzteils geformt und die auf die Kauebene bezogenen Okklusalflächen an der Modellation mit Hilfe eines das Arbeitsmodell aufnehmenden Artikulators ausgebildet werden.

Die Modellation kann ein Wachsformteil zur Herstellung einer Gießform für das Zahnersatzteil oder das durch Keramikschichtung aufgebaute Zahnersatzteil selbst sein.

Bei bekannten Verfahren dieser Art wird auch vom zweiten Kiefer ein Modell angefertigt und dem Arbeitsmodell gegenüber am beweglichen Teil des Artikulators angeordnet. Um die physiologischen Okklusalflächen an der Modellation ausbilden zu können, werden die schädelbezogenen Gebißrelationen mittels komplizierter Schädelmessungen und mit Hilfe von im Munde in der Zentrik genommenen Wachsbissen ermittelt und in den dazu hochwertigen und komplizierten Artikulator übertragen. Durch die nachahmenden Bewegungen im Artikulator werden die Kaubewegungen außerhalb des Mundes künstlich simuliert und danach die Okklusalflächen an der im Artikulator auf dem Arbeitsmodell befindlichen Modellation vom Zahntechniker nachempfunden und mehr oder weniger willkürlich ausgeformt. Hierfür sind nicht nur umfangreiche technische Hilfsmittel und große Erfahrung des Zahntechnikers erforderlich, sondern der Nachteil dieser bekannten Verfahren ist besonders auch darin zu sehen, daß der Ausbildung der Okklusalflächen nicht die individuellen Kauwege des Patienten, sondern artifizielle fremde Kauwege zugrunde gelegt werden, die von der Baubeschaffenheit des benutzten Artikulators und von den mit seiner Hilfe simulierten Kieferbewegungen abhängen. Spätere Mängelbeseitigungen an den artikulatorbedingten artifiziellen Okklusalflächen mit dem damit verbunden hohen Arbeitsaufwand sind unvermeidlich.

Die EP-A-0074 527 offenbart ein Verfahren zur Herstellung eines Zahnersatzteils wie im Oberbegriff des Anspruchs 1 angegeben. Die WO 83/00431 offenbart einen Artikulator wie im Oberbegriff des Anspruchs 7 angegeben

Der Erfindung liegt die Aufgabe zugrunde, ein Verfahren der eingangs genannten Art so auszubilden, daß die individuellen Kaubewegungen des Patienten auch in einem Artikulator einfacher Baubeschaffenheit sehr genau meßbar nachvollzogen und die ihnen entsprechenden individuellen Kauwege auf einfache Weise in exakter Replik auf die Okklusalflächen des Zahnersatzteils außerhalb des Mundes übertragen werden können.

Diese Aufgabe wird nach der Erfindung dadurch gelöst, daß durch Ausformen im Munde unter Ausführung von Kaubewegungen ein Reliefmodell mit Kauwegflächen gebildet wird, die auf den mit dem Zahnersatzteil auszustattenden Kiefer bezogen sind und die das Muster der von den - zumindest dem Zahnersatzteil gegenüber stehenden - Zähnen des anderen Kiefers ausgeführten Kauwege darstellen, welche den Schlußbißsituationen unter Erfassung des zentrischen Bisses und der Bißvarianten, wie Protrusion, Retrusion, Laterotrusion und/oder Mediotrusion, entsprechen, daß dieses Reliefmodell mit dem Arbeitsmodell zusammengefügt in den Artikulator eingesetzt wird, daß bei im Schließzustand befindlichem Artikulator fest an den dem Arbeits- und dem Reliefmodell gegenüber liegenden beweglichen Artikulatorteil ein die Kauwegflächen des Reliefmodells abformender Konterkörper mit einer expansions- und kontraktionsfrei aushärtenden Formmasse angegossen wird, und daß nach Beseitigen des Reliefmodells die physiologischen Okklusalflächen an der Modellation des Zahnersatzteils vertikal und lateral in Bezug auf die am Konterkörper abgeformten Kauwegflächen in der dem Schließzustand des Artikulators entsprechenden Lage des Konterkörpers ausgebildet werden.

Nach der Erfindung werden die individuellen, im Reliefmodell ausgeformten Kauwegflächen beim Ausgießen als exakte Replik auf den Konterkörper abgeformt, wo sie in der Schließstellung des Artikulators eine auf das im Artikulator befindliche Arbeitsmodell bezogene exakte Wiedergabe der Gebißrelationen hinsichtlich Kauebene, Zentrik und Bißvarianten bilden. In Bezug auf diese Kauwegflächen am Konterkörper können die physiologischen Okklusalflächen an der Modellation außerhalb des Mundes frei von willkürlicher Gestaltung genau ausgebildet werden. Der Herstellungsprozess ist so exakt, daß die Einprobe der fertigen Arbeit regelmäßig die sofortige Akzeptanz durch den Patienten findet, der seine individuell formierten Okklusalflächen zurückerhält.

Aufwendige technische Hilfsmittel zur Ermittlung der schädelbezogenen Gebißrelationen und deren Übertragung in einen hochwertigen Artikulator sind nicht mehr erforderlich.

Eine bevorzugte Ausführungsform des erfindungsgemäßen Verfahrens ist dadurch gekennzeichnet, daß zur Herstellung des Reliefmodells zwischen die Zahnreihen des Patienten eine Kauschablone aus von den Zahnreihen plastisch bis in die Schlußbißsituationen verformbarem Werkstoff, wie Wachs, eingeführt und an dem dem Arbeitsmodell entsprechenden Kiefer fixiert wird, daß dann in die Kauschablone durch die Kaubewegungen des Patienten die Zähne des dem Arbeitsmodell entsprechenden Kiefers eingedrückt und die Kauwegflächen der Kauwege der Zähne des anderen Kiefers eingeformt werden, und daß zum Zusammenfügen des so erhaltenen Reliefmodells und des Arbeitsmodells die Kauschablone mit den von den Zähnen des dem Arbeitsmodell entsprechenden Kiefers herrührenden Eindrücken auf die Zähne des Arbeitsmodells aufgesetzt wird. Die Kauschablone behindert dank ihrer Verformbarkeit bis in die Schlußbißsituationen nicht das Zusammenbeißen der Zahnreihen bis jeweils in den Schlußbiß und gibt daher, aufgesetzt auf die Zähne des Arbeitsmodells, die den Schlußbißsituationen entsprechenden Kauwege in Bezug auf das Arbeitsmodell in kauebenenrichtiger Gebißrelation wieder.

Zweckmäßig wird die Kauschablone bei der Ausformung durch die Kaubewegungen im Munde des Patienten an der Stelle des herzustellenden Zahnersatzteils gegen den Kieferkamm bzw. Pfeilerzahn durch einen Stop abgestützt, so daß sie sich unter den Bißkräften nicht in die durch das Zahnersatzteil zu schließende Gebißlücke durchbiegen kann.

Eine andere Möglichkeit zur Herstellung des Reliefmodells besteht erfindungsgemäß darin, daß zunächst ein Brückengerüst für das Zahnersatzteil gefertigt wird, auf dem die zu ergänzenden Brücken- und Kronenteile mit in Bezug auf die Kauebene geringfügiger Überhöhung aus formbarer Aufbaumasse aufgebaut werden, das dann bei einer Gerüsteinprobe am Kiefer durch Kaubewegungen des Patienten die kauebenenrichtigen Kauwegflächen in die Aufbaumasse der Brücken- und Kronenteile eingeformt werden und daß zum Zusammenfügen des so erhaltenen Reliefmodells und des Arbeitsmodells das Brückengerüst mit den aufgebauten Brücken- und Kronenteilen in das Arbeitsmodell eingesetzt wird.

Zur Ausbildung der physiologischen Okklusalflächen an der Modellation in Bezug auf die am Konterkörper abgeformten Kauwegflächen wird als bevorzugte Verfahrensweise erfindungsgemäß vorgeschlagen, daß ein für das Zahnersatzteil angefertigtes Brückengerüst in das im Artikulator befindliche Arbeitsmodell eingesetzt wird, daß auf das Brückengerüst bei offenem Artkulator eine formbare Masse aufgebracht und dann durch Schließen des Artikulators der Konterkörper über ein zwischengeschaltetes, eine Verbindung verhinderndes Isoliermittel in die Masse eingedrückt wird und dabei die an ihm ausgebildeten Kauwegflächen in die Masse kauebenenrichtig abgeformt werden, und daß ausgehend von diesen abgeformten Kauwegflächen unter deren gleichzeitiger Begrenzung auf die physiologischen Okklusalflächen die Modellation des Zahnersatzteils aus der Masse geformt wird. Diese Arbeitsweise kann für Modellationen aus Wachs und im Prinzip auch für Modellationen aus Keramikschichtung eingesetzt werden. Im letzteren Fall einer beim Härten schwindenden formbaren Masse, wie eine zu einem steifen Teig angemachte und beim Brennen zusammensinternde Keramikmasse, wird das Aufbringen der formbaren Masse, das Abdrücken der Kauwegflächen in die formbare Masse und die weitergehende Formgebung der formbaren Masse jeweils insgesamt in mehreren aufeinander folgenden Arbeitsprozessen und zwischen diesen Arbeitsprozessen je ein Härtungsprozess vorgenommen, wobei in den einzelnen Arbeitsprozessen die formbare Masse auf die jeweils vorhergehend schon gehärtete Masse aufgeschichtet wird. In allen diesen Fällen können Überhöhungen der Modellation leicht dadurch festgestellt werden, daß sich der Artikulator bei Überhöhungen nicht mehr in die exakte Schließstellung bringen läßt, was am Artikulator in noch zu beschreibender Weise leicht und sehr genau zu messen ist, so daß jede Überhöhung der Modellation ohne weiteres exakt beseitigt werden kann.

Gegenstand der Erfindung ist auch ein Artikulator, bestehend aus einem feststehenden, das Arbeitsmodell in genau reproduzierbarer Lage aufnehmenden Artikulatorteil und einem daran über ein Artikulatorgelenk angeschlossenen beweglichen Artikulatorteil, sowie einem Anschlag, der im Schließzustand des Artikulators den Weg des beweglichen Artikulatorteils begrenzt und die gegenseitige Lage beider Artikulatorteile zueinander genau festlegt, und aus je einer Halteplatte an beiden Artikulatorteilen. Ein solcher Artikulator ist, damit er sich zur Durchführung des erfindungsgemäßen Verfahrens besonders eignet, dadurch gekennzeichnet, daß die Halteplatte am beweglichen Artikulatorteil höheneinstellbar angeordnet ist und Retentionen zur Verankerung des an die Halteplatte angegossenen Konterkörpers aufweist, und daß zwischen beiden Artikulatorteilen eine Meßeinrichtung vorgesehen ist, die zumindest bei fast im Schließzustand befindlichem Artikulator mißt, wie weit der bewegliche Artikulatorteil aus seiner dem genauen Schließzustand des Artikulators entsprechenden Lage entfernt ist. Die Meßeinrichtung gestattet dann, in der schon angesprochenen Weise jede Überhöhung der Modellation zu erfassen und ihrer Größe nach genau zu messen. Zweckmäßig ist die Halteplatte des beweglichen Artikulatorteils als ein Plattenstreifen ausgebildet, der längs einem etwa ovalen Linienzug verläuft, welcher dem Verlauf des Kieferkamms des Arbeitsmodells folgt, das sich auf der Halteplatte des feststehenden Artikulatorteils befindet. Die Retentionen der Halteplatte des beweglichen Artikulatorteils sind zweckmäßig durch Löcher in der Halteplatte gebildet. Weiter empfiehlt sich, daß die Meßeinrichtung am beweglichen Artikulatorteil höheneinstellbar angeordnet ist und einen am feststehenden Artikulatorteil abgestützten Meßfühler sowie eine im Schließzustand des Artikulators auf Null einstellbare Meßwertskala aufweist. Vorzugsweise ist die Meßeinrichtung als Meßuhr ausgebildet, wobei die Meßskala der Meßuhr drehbar und unabhängig von der Stellung des Meßfühlers mit dem Skalennullpunkt auf den Meßzeiger der Meßuhr einstellbar ist. Die Meßuhr ermöglicht die sehr genaue quantitative Erfassung von Ungenauigkeiten der Modellation bis in den Folien-Bereich (25 ).

In bevorzugter Ausführungsform ist die Meßeinrichtung fest an einem den Anschlag bildenden Schaft angeordnet und der Schaft höheneinstellbar am beweglichen Artikulatorteil gehalten. Der Anschlag und die Meßeinrichtung lassen sich dann gemeinsam verstellen.

Gegenstand der Erfindung ist schließlich auch eine zur Durchführung des erfindungsgemäßen Verfahrens besonders geeignete, zur Herstellung des Reliefmodells dienende Kauschablone. Sie ist erfindungsgemäß gekennzeichnet durch eine Platte aus plastisch formbarem Werkstoff mit einem im wesentlichen ebenen dünnwandigen Plattenstreifen, der in einer etwa ovalen Linienführung verlaüft, die dem Kieferkamm im Munde des Patienten folgt, und mit einem aus der Ebene des Plattenstreifens herausgewölbten Plattenteil, der längs des Plattenstreifens an dessen konkav verlaufenden Innenrand angeschlossen ist. Der aus der Ebene des Plattenstreifens herausgewölbte Plattenteil versteift und stabilisiert statisch den dünnwandigen Plattenstreifen, so daß er sich nach der Ausformung der Kauwegflächen nicht weiter verformen kann und das kauebenenrichtige Relief der Kauwegflächen bei der weiteren Benutzung der Kauschablone im Artikulator erhalten bleibt. Zweckmäßig besitzt der aus der Ebene des Plattenstreifens herausgewölbte Plattenteil größere Wandstärke als der Plattenstreifen. Außerdem kann der Plattenstreifen in seinem Scheitelbereich eine am äußeren konvexen Streifenrand sitzende und vom Plattenstreifen etwa in seiner Ebene abstehende Zunge zum Greifen der Kauschablone tragen, was die Manipulation der Kauschablone sowohl im Munde als auch im Artikulator vereinfacht.

Im folgenden wird die Erfindung anhand von Ausführungsbeispielen, die in der Zeichnung dargestellt sind, näher erläutert; es zeigen:
- Fig. 1: eine Darstellung der Zahnreihen von Ober- und Unterkiefer mit einer zwischen die Zahnreihen eingeführten Kauschablone in einer schematischen Seitenansicht zur Erläuterung der Herstellung des Reliefmodells mit den Kauwegflächen,
- Fig. 2: eine Darstellung der Gebißreihen mit dazwischen liegender Kauschablone in einer schematischen Ansicht quer zu der in Fig. 1 eingetragenen Linie I - I in im Vergleich zu Fig. 1 vergrößertem Maßstab bei zentrischem Schlußbiß,
- Fig. 3: den Gegenstand der Fig. 2 ebenfalls im Schlußbiß, aber in einer Seitbißvariante,
- Fig. 4: eine der Fig. 2 entsprechende Ansicht quer zu der in Fig. 1 eingetragenen Linie II - II,
- Fig. 5: den Gegenstand der Fig. 4 in einer der Fig. 3 entsprechenden Darstellung,
- Fig. 6: eine den Fig. 2 und 4 entsprechende Ansicht quer zu der in Fig. 1 eingetragenen Linie III - III,
- Fig. 7: den Gegenstand der Fig. 6 in einer den Fig. 3 und 5 entsprechenden Darstellung,
- Fig. 8: eine Schrägansicht einer Kauschablone,
- Fig. 9: eine Ansicht der Kauschablone nach Fig. 8 in Richtung des dort eingetragenen Pfeiles IX,
- Fig. 10: eine Draufsicht auf die Kauschablone nach den Fig. 8 und 9 mit eingeformten Kauwegflächen,
- Fig. 11: eine Ansicht der Kauschablone nach den Fig. 8 bis 10 von unten mit eingeformten Zahneindrücken,
- Fig. 12: eine der Fig. 1 entsprechende Seitenansicht zur Erläuterung der Herstellung einer anderen Ausführungsform des Reliefmodells,
- Fig. 13: einen für die Durchführung des erfindungsgemäßen Verfahrens Verwendung findenden Artikulator mit eingesetztem Arbeitsmodell und Kauschablone in einer schematischen Seitenansicht,
- Fig. 14: den Gegenstand der Fig. 13 ohne Kauschablone,
- Fig. 15: eine Draufsicht auf die Halteplatte des beweglichen Artikulatorteils,
- Fig. 16: die Halteplatte nach Fig. 15 montiert an einer Anschlußplatte des Artikulators nach Fig. 13 in einer Schrägansicht,
- Fig. 17: eine schematische Schnittdarstellung durch das Arbeitsmodell, das Reliefmodell und den Konterkörper im Artikulator gemäß Schnittlinie XVII in Fig. 13 in einer der Fig. 2 entsprechenden Darstellung,

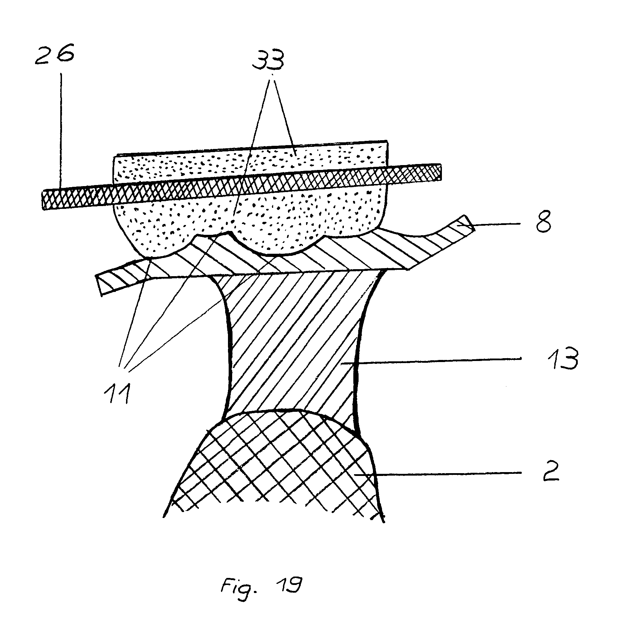

- Fig. 18: eine Schnittdarstellung entsprechend Fig. 17 gemäß Schnittlinie XVIII in Fig. 13 in einer der Fig. 4 entsprechenden Darstellung, und
- Fig. 19: eine Schnittdarstellung entsprechend Fig. 17 gemäß Schnittlinie IXX in Fig. 13 in einer der Fig. 6 entsprechenden Darstellung.

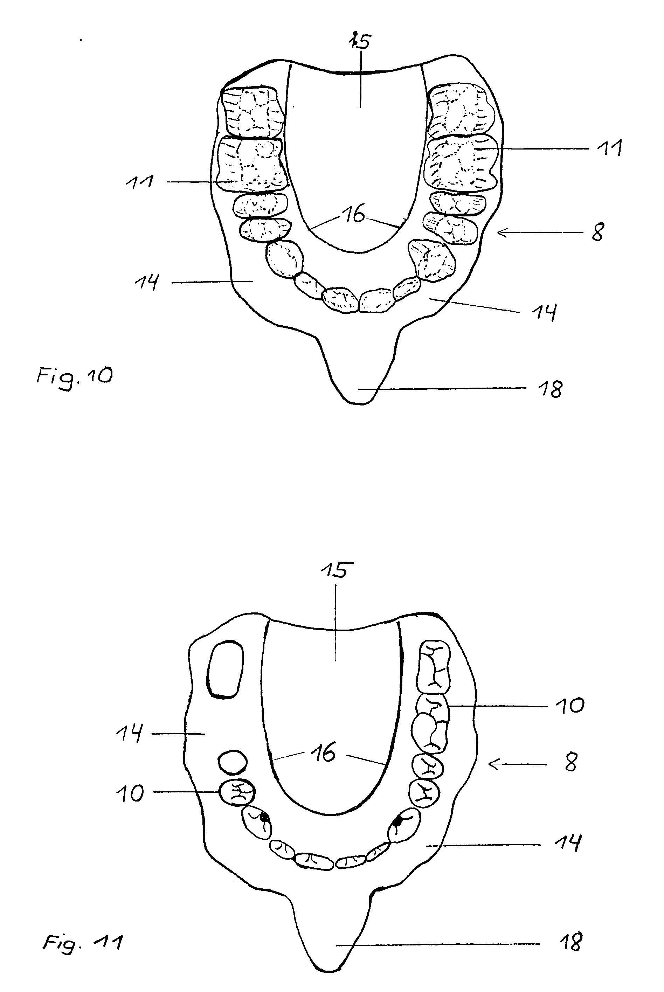

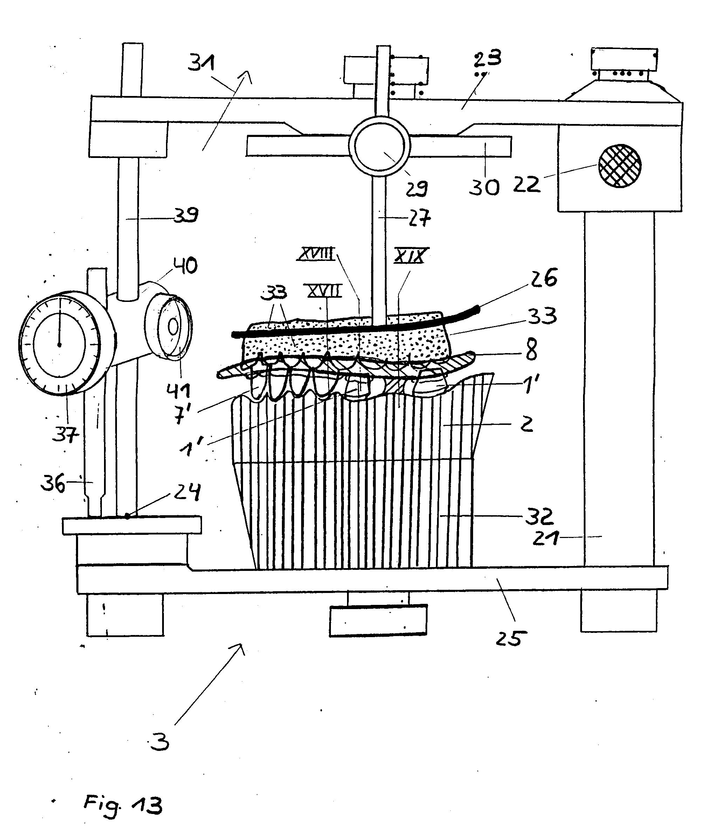

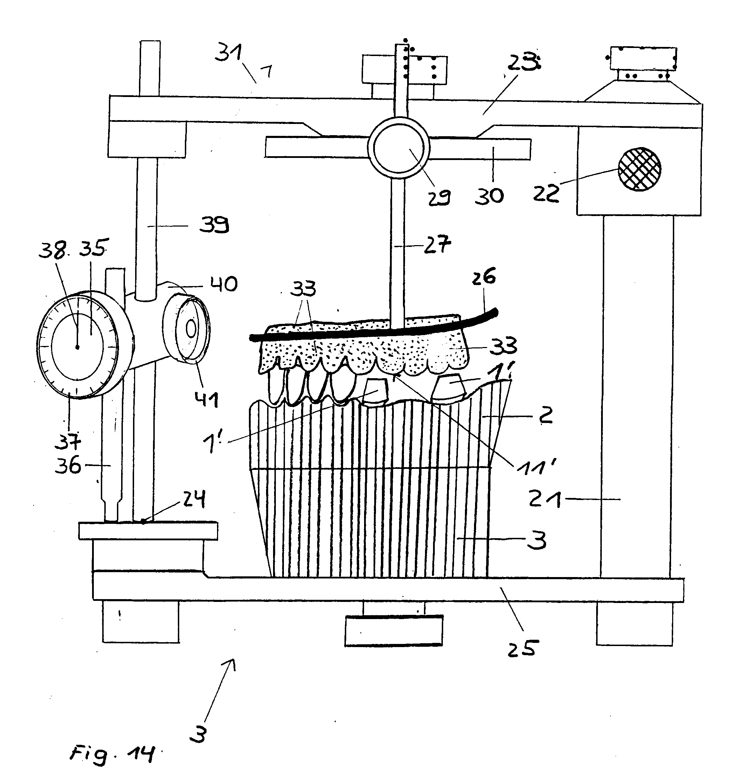

Zur Anfertigung eines Zahnersatzteils, das als eine in der Zeichnung nicht dargestellte Kronen- und Brückenarbeit angenommen ist, wird nach üblichen Beschleifmaßnahmen an den Pfeilerzähnen 1 durch Abdruck im Munde ein Arbeitsmodell 2 hergestellt, das in den Fig. 13 und 14, eingesetzt in einen allgemein mit 3 bezeichneten Artikulator, in einer schematischen Seitenansicht dargestellt ist und die aktuelle Situation des mit dem Zahnersatzteil auszustattenden Kiefers wiedergibt. Dieser Kiefer ist in der Zeichnung als der Unterkiefer 4 angenommen. Die beschliffenen Pfeilerzähne 1 sind im Arbeitsmodell 2 mit 1' bezeichnet. Das Arbeitsmodell 2 dient zur Herstellung einer in der Zeichnung ebenfalls nicht dargestellten Modellation des Zahnersatzteils, wobei diese Modellation ein Wachsmodell des Zahnersatzteils zur Herstellung einer Gußform oder das durch Keramikschichtung aufgebaute Zahnersatzteil selbst sein kann. In letzterem Fall wird eine zu einem formbaren steifen Teig angemachte und beim Brennen sinternde Keramikmasse auf ein bereits gefertigtes Brückengerüst des Zahnersatzteils aufgeformt. Die dabei modellierte Form erleidet beim Brennen eine Schrumpfung, die durch wiederholten Auftrag der Keramikmasse mit jeweils zwischengeschalteten Brennvorgängen ausgeglichen werden muß. - Das Arbeitsmodell 2 wird in den Artikulator 3 eingesetzt, damit an der Modellation die physiologischen Okklusalflächen in noch näher zu beschreibender Weise nach Maßgabe der individuellen Gebißrelationen des Patienten ausgebildet werden können.

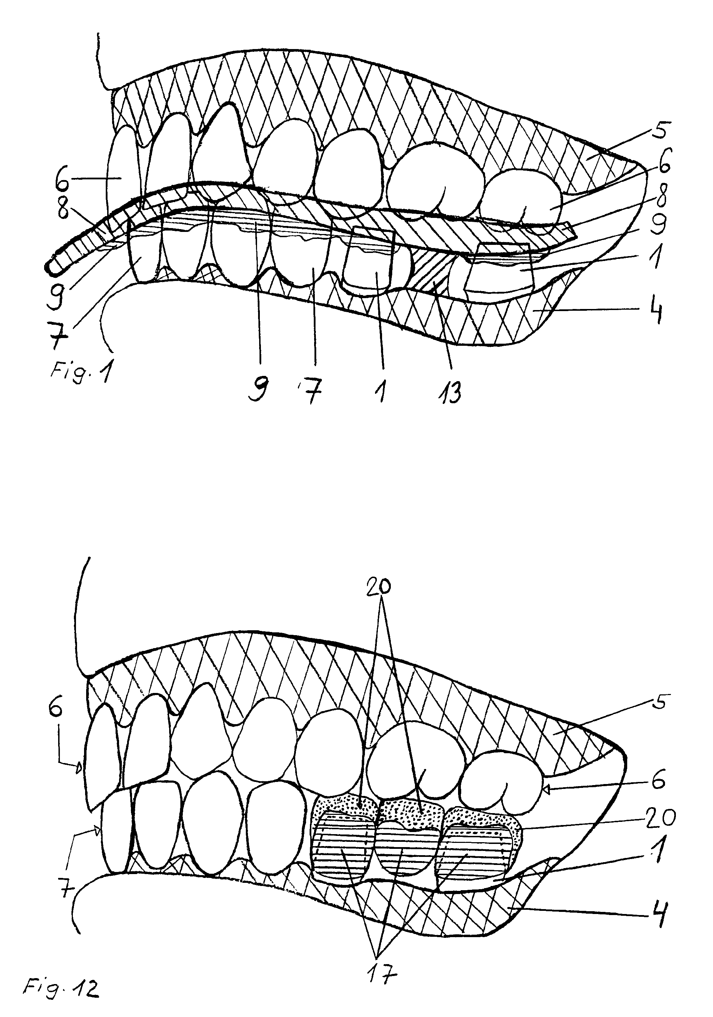

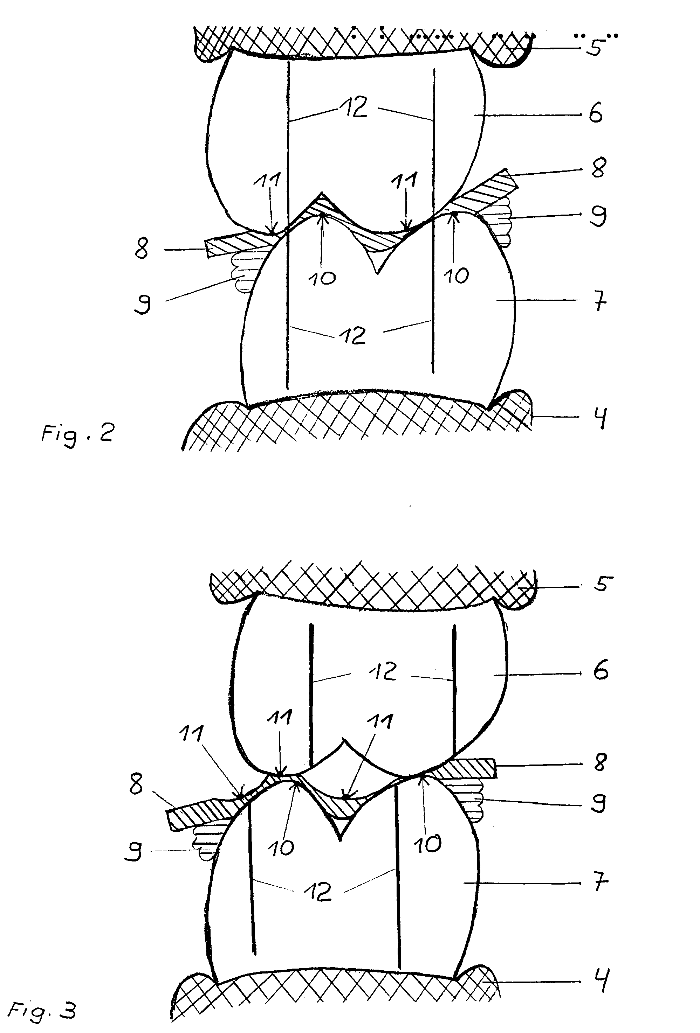

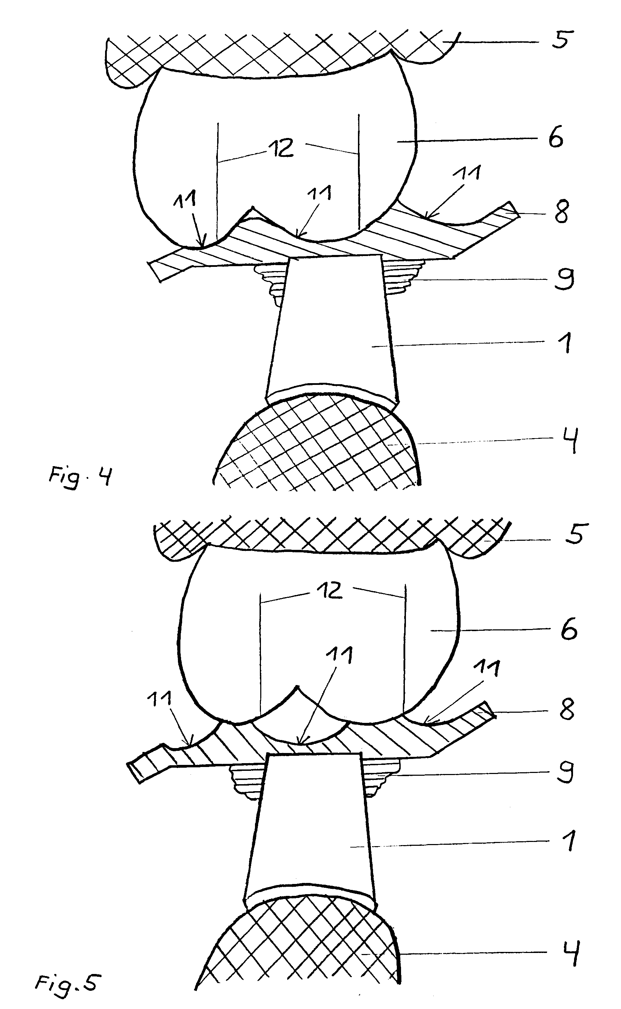

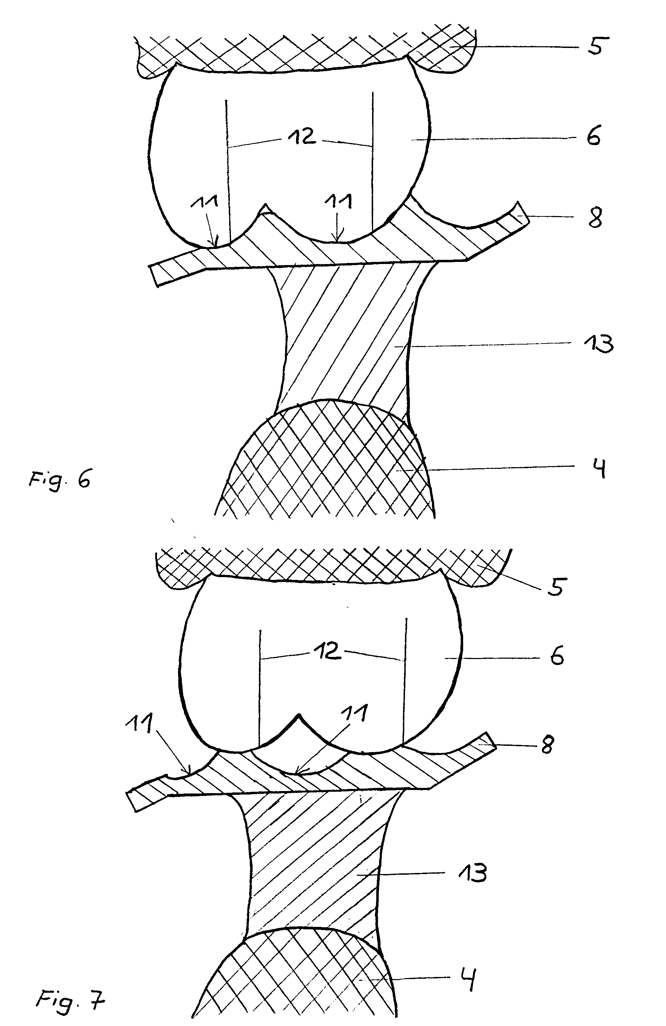

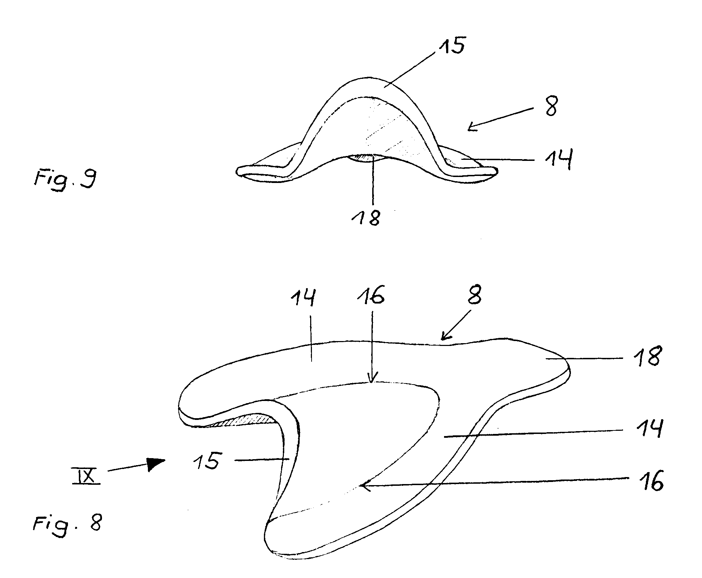

In der Seitenansicht nach Fig. 1, welche die Situation im Munde des Patienten darstellt, ist der Unterkiefer mit 4, der Oberkiefer mit 5 bezeichnet. Die Zahnreihe im Oberkiefer 5 ist mit 6, die Zahnreihe im Unterkiefer 4 mit 7 bezeichnet. Die entsprechende Zahnreihe ist im Arbeitsmodell 2 mit 7' bezeichnet. Zwischen die Zahnreihen 6 und 7 ist eine Kauschablone 8 eingeführt und am Unterkiefer 4 fixiert, wozu die Kauschablone 8 mit Wachsstreifen 9 an der Zahnreihe 7 bzw. an den Pfeilerzähnen 1 festgelegt ist. Mit dieser Kauschablone 8 im Munde führt der Patient Kaubewegungen aus und beißt dabei die Zahnreihen 6, 7 bis in den Schlußbiß zusammen. Dabei drücken sich die Zähne des Unterkiefers 4 in die Unterseite der Kauschablone 8 ein, was die aus Fig. 11 ersichtlichen Zahneindrücke 10 ergibt. Auf der dem Oberkiefer 5 zugewandten Seite der Kauschablone 8 bilden sich dagegen die Kauwege der Zahnreihe 6 ab, wodurch in der Kauschablone 8 Kauwegflächen 11 eingeformt werden, die - wegen der Fixierung der Kauschablone 8 an der Zahnreihe 7 - auf den Unterkiefer 4 bezogen sind. Dabei sind die Kauwege im einzelnen Laterotrusions-, Mediotrusions-, Protrusions- und Retrusionswege. Die Fig. 2, 4 und 6 zeigen die Verhältnisse in der zentrischen Schlußbißsituation, angedeutet durch die Koinzidenz der in den Figuren an beiden Zahnreihen 6 und 7 eingetragenen Markierungen 12. Die Fig. 3, 5 und 7 zeigen dagegen eine Bißvariante als Laterotrusion. Die Zahnreihe 7 des Unterkiefers 4 ist gegenüber der Zahnreihe 6 des Oberkiefers 5 lateral verschoben. Dargestellt ist auch hier wieder die Schlußbißsituation, die in keinem Fall durch die zwischen den Zahnreihen 6 und 7 befindliche Kauschablone 8 behindert werden kann, weil sich die Kauschablone 8 unter den Bißkräften plastisch verformt, bis sich die Zahnreihen 6 und 7 jeweils in der Schlußbißsituation zueinander befinden. Im Ergebnis bildet die Kauschablone 8 mit den Zahneindrücken 10 und den Kauwegflächen 11 ein Reliefmodell, das auf den mit dem Zahnersatzteil auszustattenden Kiefer 4 bezogen ist und das Flächenrelief der von den Zähnen des anderen Kiefers 5 ausgeführten Kauwege enthält, die den Schlußbißsituationen unter Erfassung des zentrischen Bisses und aller Bißvarianten entsprechen. Die Kauschablone 8 kann gemäß den Fig. 6 und 7 bei der Ausformung der Kauwegflächen 11 an der Stelle des herzustellenden Zahnersatzteils, wo also die Zahnreihe 7 eine durch das Zahnersatzteil zu schließende Lücke aufweist, durch einen Stop 13 gegen den Kieferkamm abgestützt sein, um ein Durchbiegen der Kauschablone 8 unter den Bißkräften in die Gebißlücke hinein zu verhindern.

Im einzelnen ist die Kauschablone 8 eine Platte aus plastisch formbarem Werkstoff, wie Wachs, mit einem im wesentlichen ebenen dünnwandigen Plattenstreifen 14, der in einer etwa ovalen Linienführung verläuft, die dem Kieferkamm im Munde des Patienten folgt. Der Plattenstreifen 14 ist längs seines konkav verlaufenden Innenrandes 16 an einen aus der Ebene des Plattenstreifens 14 herausgewölbten Plattenteil 15 angeschlossen, der den Plattenstreifen 14 versteift und unerwünschte Verformungen des Plattenstreifens 14 verhindert. Dazu kann der aus der Ebene des Plattenstreifens 14 herausgewölbte Plattenteil 15 im übrigen größere Wandstärke als der Plattenstreifen 14 besitzen. Im übrigen trägt der Plattenstreifen 14 in seinem Scheitelbereich eine am äußeren konvexen Streifenrand 19 sitzende und vom Plattenstreifen 14 etwa in seiner Ebene abstehende Zunge 18, an dem die Kauschablone 8 ergriffen und im Munde, bzw. im Artikulator 3 manipuliert werden kann.

Das von der Kauschablone 8 gebildete Reliefmodell wird mit dem Arbeitsmodell 2 in der Weise zusammengefügt, daß die Kauschablone 8 mit den von den Zähnen des Unterkiefers 4 herrührenden Zahneindrücken 10 auf die entsprechende Zahnreihe 7' des Arbeitsmodells 2 aufgesetzt wird.

Ein anderer Weg zur Herstellung des Reliefmodells besteht darin, daß zunächst in üblicher Weise ein Brückengerüst 17 aus Metall für das Zahnersatzteil gefertigt wird. Auf diesem Brückengerüst 17 werden die zu ergänzenden Brücken- und Kronenteile 20 mit in Bezug auf die Kauebene geringfügiger Überhöhung aus formbarer Aufbaumasse, wie Wachs, aufgebaut. Dann werden bei einer Gerüsteinprobe am Kiefer 4 durch Kaubewegungen des Patienten die kauebenenrichtigen Kauwegflächen in die Aufbaumasse der Brücken- und Kronenteile 20 eingeformt. Das so erhaltene Reliefmodell wird dann mit dem Arbeitsmodell 2 in der Weise zusmmengefügt, daß das Brückengerüst 17 mit den aufgebauten, die Kauwegflächen tragenden Brücken- und Kronenteilen 20 in das Arbeitsmodell 2 eingesetzt wird.

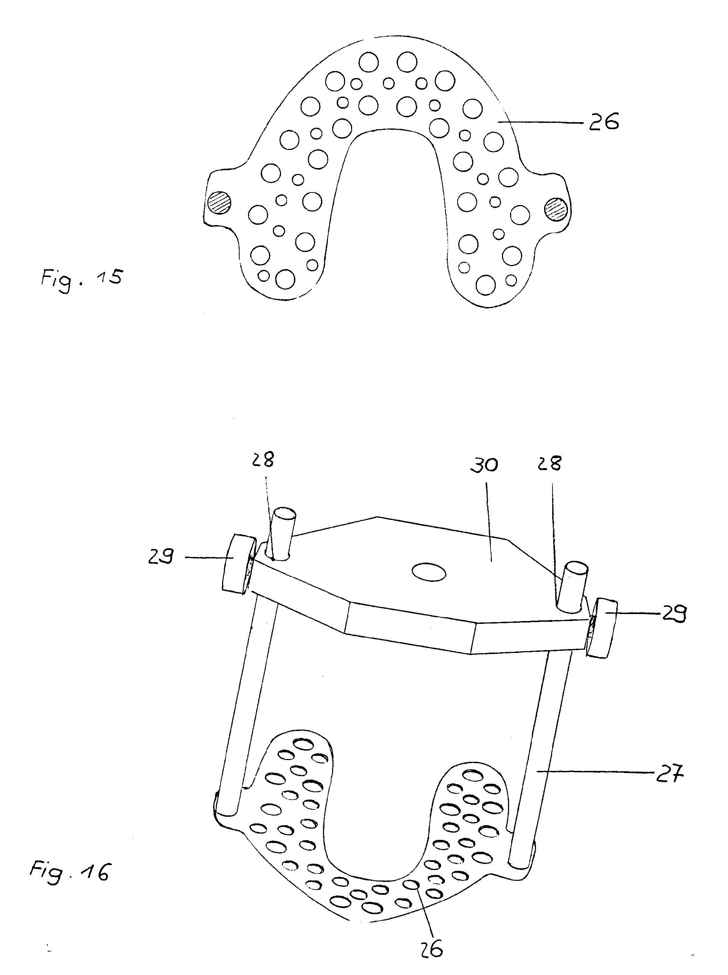

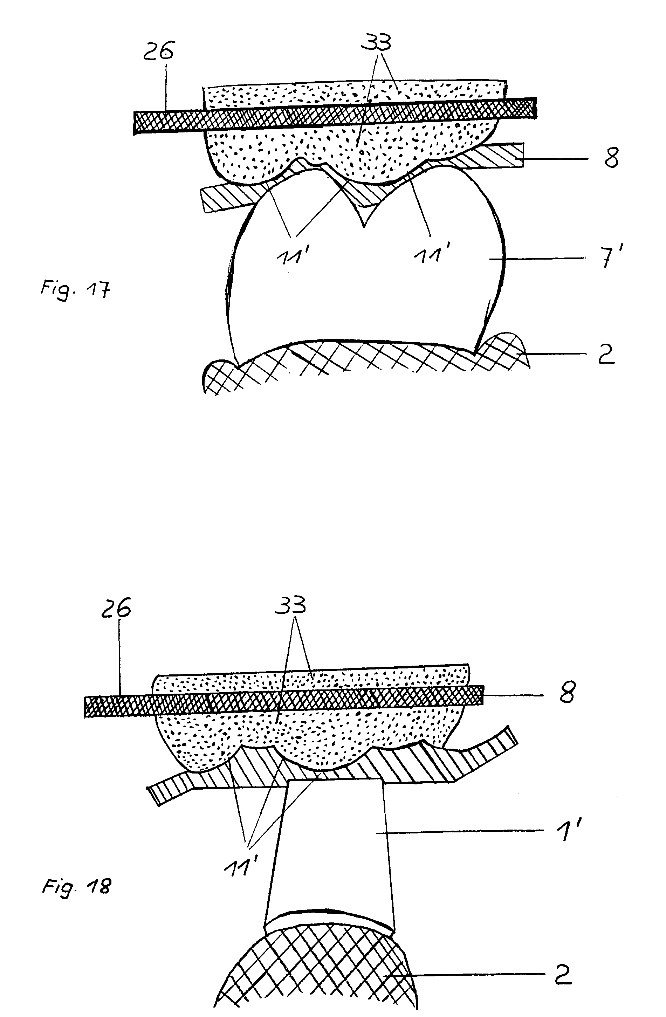

Der aus den Fig. 13 bis 16 ersichtliche Artikulator 3 besteht aus einem feststehenden Artikulatorteil 21 und einem daran über ein Artikulatorgelenk 22 angeschlossenen beweglichen Artikulatorteil 23, sowie einem Anschlag 24, der im Schließzustand des Artikulators 3 den Weg des beweglichen Artikulatorteils 23 begrenzt und die gegenseitige Lage beider Artikulatorteile 21, 23 zueinander genau festlegt. An jedem Artikulatorteil 21, 23 befindet sich je eine Halteplatte 25, 26. Die Halteplatte 26 ist am beweglichen Artikulatorteil 23 höheneinstellbar angeordnet, wozu die Halteplatte 26 an Führungsstangen 27 sitzt, die in Führungen 28 einer am beweglichen Artikulatorteil 23 festen Tragplatte 30 verstellbar und mittels Klemmschrauben 29 feststellbar sind. Der bewegliche Artikulatorteil 23 ist aus der in der Zeichnung dargestellten Schließstellung des Artikulators 3 um die Artikulatorachse 22 in Richtung des Pfeiles 31 aufklappbar.

Der feststehende Artikulatorteil 21 nimmt das Arbeitsmodell 2 in genau reproduzierbarer Lage auf. Dazu ist auf der Halteplatte 25 ein das Arbeitsmodell 2 tragender Sockel 32 aus Gips errichtet. Zunächst befindet sich im Artikulator auf dem Arbeitsmodell 2 entsprechend Fig. 13 die Kauschablone 8. Im Schließzustand des Artikulators 3 wird nun an die Halteplatte 26 ein Konterkörper 33 aus einer zunächst leicht formbaren, dann aber expansions- und kontraktionsfrei aushärtenden Formmasse, wie expansionsfreier Gips, fest angegossen, wobei sich die Kauwegflächen 11 der Kauschablone 8 exakt am Konterkörper 33 abformen, der somit an seiner dem Arbeitsmodell 2 zugewandten Seite eine exakte Replik der Kauwegflächen 11 erhält. Diese Kauwegflächen am Konterkörper 33 sind in der Zeichnung, insbesondere in Fig. 14, welche die Situation nach Beseitigen der Kauschablone 8 zeigt, mit 11' bezeichnet. Um den Konterkörper 33 zuverlässig an der Halteplatte 26 zu verankern, ist die Halteplatte 26 mit Retentionen in Form von Löchern 34 versehen, durch welche hindurch die den Konterkörper 33 bildende Formmasse im zunächst noch formbar-flüssigen Zustand die Halteplatte 26 umfließt und sie einbettet.

Zwischen den beiden Artikulatorteilen 21, 22 ist eine Meßeinrichtung 35 vorgesehen, die zumindest bei fast im Schließzustand befindlichem Artikulator 3 mißt, wie weit der bewegliche Artikulatorteil 23 aus seiner dem genauen Schließzustand des Artikulators 3 entsprechenden Lage entfernt ist. Dazu ist die Meßeinrichtung 35 am beweglichen Artikulator 4 höheneinstellbar angeordnet und besitzt einen am feststehenden Artikulatorteil 21 abgestützten Meßfühler 36 sowie eine im Schließzustand des Artikulators 3 auf Null einstellbare Meßwertskala 37. Die Meßeinrichtung 35 ist als Meßuhr ausgebildet, wobei die Meßwertskala 37 drehbar und unabhängig von der Stellung des Meßfühlers 36 mit dem Skalennullpunkt auf den Meßzeiger 38 einstellbar ist. Die Meßeinrichtung 35 ist an einem den Anschlag 24 bildenden Schaft 39 angeordnet, der seinerseits höheneinstellbar am beweglichen Artikulatorteil 23 gehalten ist. An diesem Schaft 39 ist die Meßeinrichtung 35 mittels einer Klemmmuffe 40 höhenverschiebbar geführt. in der jeweiligen Einstellung kann die Klemmmuffe mittels einer Klemmschraube 41 am Schaft 39 fixiert werden.

Ist entsprechend dem in Fig. 14 dargestellten Zustand die Kauschablone 8 bzw. allgemein das die Kauflächen 11' am Konterkörper 33 ausbildende Reliefmodell entfernt, wird auf dem Arbeitsmodell 2 die Wachs- oder Keramikmodellation aufgebaut. Dabei vollzieht sich die Ausbildung der physiologischen Okklusalflächen an der Modellation unter beständiger Bezugnahme auf die am Konterkörper 33 abgeformten Kauwegflächen 11', wozu der bewegliche Artikulatorteil 23 mit dem Konerkörper 33 immer wieder in die dem Schließzustand des Artikulators 3 entsprechende, durch den Anschlag 24 bestimmte Lage gebracht wird. Im einzelnen wird dabei in das im Artikulator 3 befindliche Arbeitsmodell 2 ein für das Zahnersatzteil bereits angefertigtes Brückengerüst eingesetzt. Auf das Brückengerüst wird bei offenem Artikulator eine formbare Masse aufgebracht. Dann wird durch Schließen des Artikulators 3 der Konterkörper 33 über ein zwischengeschaltetes, eine Verbindung verhinderndes Isoliermittel in die Masse eingedrückt. Dabei werden die am Konterkörper 33 ausgebildeten Kauwegflächen 11' in die Masse kauebenenrichtig abgeformt. Ausgehend von diesen abgeformten Kauwegflächen wird die Modellation des Zahnersatzteils aus der Masse geformt, wobei gleichzeitig die Kauwegflächen unter teilweisem Wegfall der in Fig. 10 schraffiert gezeichneten Bereiche auf die physiologischen Okklusalflächen begrenzt werden. Im Fall einer Keramikmodellation wird das Aufbringen der formbaren Masse, das Abdrücken der Kauwegflächen 11' in die formbare Masse und die weitergehende Formgebung der formbaren Masse zu den ergänzenden Kronen- und Brückenteilen jeweils insgesamt in mehreren aufeinander folgenden Arbeitsprozessen durchgeführt, wobei zwischen diese Arbeitsprozesse jeweils ein Härtungsprozess eingeschaltet wird. Dabei wird in den einzelnen Arbeitsprozessen die formbare Masse auf die jeweils vorhergehend schon gehärtete Masse aufgeschichtet. Soweit sich beim Modellationsaufbau Überhöhungen in Bezug auf die Kauebene ergeben, werden solche Überhöhungen beim Schließen des Artikulators durch die Meßeinrichtung 35 mit außerordentlich hoher Genauigkeit quantitativ erfaßt, so daß die Überhöhungen exakt beseitigt werden können. Die bei allen diesen Arbeitsweisen zunächst in die die Modellation bildende Masse, nämlich Wachs oder Keramik, vom Konterkörper 33 durch Schließen des Artikulators abgeformten Kauwegflächen 11' werden im weiteren Formgebungsprozess vom Zahntechniker auf die auszubildenden physiologischen Okklusalflächen an der Wachs- oder Keramikmodellation begrenzt. Dabei entfallen teilweise die in Fig. 10 schraffiert gezeichneten "Überschußbereiche" der Kauwegflächen 11, da diese "Überschußbereiche" auch die extremen Kauexkursionen der Zähne und tragenden Zahnhöcker wiedergeben und für die gewünschte Ausbildung der physiologischen Kauflächen am Zahnersatzteil nicht benötigt werden.

Die Formmasse für das Reliefmodell, aus der also die Kauschablone 8 besteht oder aus der auf dem Brückengerüst 17 die zu ergänzenden Kronen- und Brückenteile 20 gemäß Fig. 12 aufgebaut werden, ist in der Regel ein Wachs, das sich, in den Mund verbracht, durch die Kaubewegungen des Patienten bei 37° C Körpertemperatur genügend leicht verformen lassen und trotzdem eine hohe Standfestigkeit und Zähigkeit aufweisen muß, insbesondere bei und nach der Entnahme des Reliefmodells aus dem Mund und Abkühlung auf Raumtemperatur, damit das Reliefmodell seine Form behält und das Wachs die individuell formierten Kauwegflächen 11 bis zum fertigen Abguß durch den Konterkörper 33 exakt bewahrt.

## Patentansprüche

1. Verfahren zur Herstellung eines Zahnersatzteils, wie Krone oder Brücke, wobei mittels eines Abdrucks im Munde ein Arbeitsmodell (2) hergestellt wird, das - nach üblichen Beschleifmaßnahmen an Pfeilerzähnen (1) - die aktuelle Situation des mit dem Zahnersatzteil auszustattenden Kiefers (4) darstellt, und wobei auf dem Arbeitsmodell (2) eine Modellation des Zahnersatzteils geformt und die auf die Kauebene bezogenen Okklusalflächen an der Modellation mit Hilfe eines das Arbeitsmodell (2) aufnehmenden Artikulators (3) ausgebildet werden, dadurch gekennzeichnet, daß durch Ausformen im Munde unter Ausführung von Kaubewegungen ein Reliefmodell mit Kauwegflächen (11) gebildet wird, die auf den mit dem Zahnersatzteil auszustattenden Kiefer (4) bezogen sind und die das Muster der von den - zumindest dem Zahnersatzteil gegenüberstehenden - Zähnen des anderen Kiefers (5) ausgeführten Kauwege darstellen, welche den Schlußbißsituationen unter Erfassung des zentrischen Bisses und der Bißvarianten, wie Protrusion, Retrusion, Laterotrusion und/oder Mediotrusion entsprechen, daß dieses Reliefmodell (8, 17, 20) mit dem Arbeitsmodell (2) zusammengefügt in den Artikulator (3) eingesetzt wird, daß bei im Schließzustand befindlichem Artikulator (3) fest an den dem Arbeits- und dem Reliefmodell gegenüberliegenden beweglichen Artikulatorteil ein die Kauwegflächen (11) des Reliefmodells (8, 17, 20) abformender Konterkörper (33) mit einer expansions- und kontraktionsfrei aushärtenden Formmasse angegossen wird, und daß nach Beseitigen des Reliefmodells die physiologischen Okklusalflächen an der Modellation des Zahnersatzteils vertikal und lateral in Bezug auf die am Konterkörper (33) abgeformten Kauwegflächen (11') in der dem Schließzustand des Artikulators (3) entsprechenden Lage des Konterkörpers (33) ausgebildet werden.

2. Verfahren nach Anspruch 1, dadurch gekennzeichnet, daß zur Herstellung des Reliefmodells zwischen die Zahnreihen (6, 7) des Patienten eine Kauschablone (8) aus von den Zahnreihen plastisch bis in die Schlußbißsituationen verformbarem Werkstoff, wie Wachs, eingeführt und an dem dem Arbeitsmodell (2) entsprechenden Kiefer (4) fixiert wird, daß dann in die Kauschablone (8) durch die Kaubewegungen des Patienten die Zähne des dem Arbeitsmodell (2) entsprechenden Kiefers (4) eingedrückt und die Kauwegflächen (11) der Kauwege der Zähne des anderen Kiefers (5) eingeformt werden, und daß zum Zusammenfügen des so erhaltenen Reliefmodells und des Arbeitsmodells (2) die Kauschablone (8) mit den von den Zähnen des dem Arbeitsmodell (2) entsprechenden Kiefers (4) herrührenden Eindrücken (10) auf die Zähne des Arbeitsmodells (2) aufgesetzt wird.

3. Verfahren nach Anspruch 2, dadurch gekennzeichnet, daß die Kauschablone (8) bei der Ausformung durch die Kaubewegungen im Munde des Patienten an der Stelle des herzustellenden Zahnersatzteils gegen den Kieferkamm bzw. Pfeilerzahn durch einen Stop (13) abgestützt wird, so daß sie sich unter den Bißkräften nicht in die durch das Zahnersatzteil zu schließende Gebißlücke durchbiegen kann.

4. Verfahren nach Anspruch 1, dadurch gekennzeichnet, daß zur Herstellung des Reliefmodells zunächst ein Brückengerüst (17) für das Zahnersatzteil gefertigt wird, auf dem die zu ergänzenden Brücken- und Kronenteile (20) mit in Bezug auf die Kauebene geringfügiger Überhöhung aus formbarer Aufbaumasse aufgebaut werden, daß dann bei einer Gerüsteinprobe am Kiefer (4) durch Kaubewegungen des Patienten die kauebenenrichtigen Kauwegflächen in die Aufbaumasse der Brücken- und Kronenteile (20) eingeformt werden und daß zum Zusammenfügen des so erhaltenen Reliefmodells und des Arbeitsmodells (2) das Brückengerüst (17) mit den aufgebauten Brücken- und Kronenteilen (20) in das Arbeitsmodell (2) eingesetzt wird.

5. Verfahren nach einem der Ansprüche 1 bis 4, dadurch gekennzeichnet, daß zur Ausbildung der physiologischen Okklusalflächen an der Modellation in Bezug auf die am Konterkörper (33) abgeformten Kauwegflächen (11') ein für das Zahnersatzteil angefertigtes Brückengerüst in das im Artikulator (3) befindliche Arbeitsmodell (2) eingesetzt wird, daß auf das Brückengerüst bei offenem Artikulator eine formbare Masse aufgebracht und dann durch Schließen des Artikulators (3) der Konterkörper (33) über ein zwischengeschaltetes, eine Verbindung verhinderndes Isoliermittel in die Masse eingedrückt wird und dabei die an ihm ausgebildeten Kauwegflächen (11') in die Masse kauebenenrichtig abgeformt werden, und daß ausgehend von diesen abgeformten Kauwegflächen unter deren gleichzeitiger Begrenzung auf die physiologischen Okklusalflächen die Modellation des Zahnersatzteils aus der Masse geformt wird.

6. Verfahren nach Anspruch 5, dadurch gekennzeichnet, daß bei einer beim Härten schwindenden formbaren Masse, wie eine zu einem steifen Teig angemachte und beim Brennen zusammensinternde Keramikmasse, das Aufbringen der formbaren Masse, das Abdrücken der Kauwegflächen (11') in die formbare Masse und die weitergehende Formgebung der formbaren Masse jeweils insgesamt in mehreren aufeinander folgenden Arbeitsprozessen und zwischen diesen Arbeitsprozessen je ein Härtungsprozeß vorgenommen wird, wobei in den einzelnen Arbeitsprozessen die formbare Masse auf die jeweils vorhergehend schon gehärtete Masse aufgeschichtet wird.

7. Artikulator zur Durchführung des Verfahrens nach den Ansprüchen 1 bis 6, bestehend aus einem feststehenden, das Arbeitsmodell (2) in genau reproduzierbarer Lage aufnehmenden Artikulatorteil (21) und einem daran über ein Artikulatorgelenk (22) angeschlossenen beweglichen Artikulatorteil (23) sowie einem Anschlag (24), der im Schließzustand des Artikulators (3) den Weg des beweglichen Artikulatorteils (23) begrenzt und die gegenseitige Lage beider Artikulatorteile (21, 23) zueinander genau festlegt, und aus je einer Halteplatte (25, 26) an beiden Artikulatorteilen (21, 23) dadurch gekennzeichnet, daß die Halteplatte (26) am beweglichen Artikulatorteil (23) höheneinstellbar angeordnet ist und Retentionen zur Verankerung des an die Halteplatte (26) angegossenen Konterkörpers (33) aufweist, und daß zwischen beiden Artikulatorteilen (21, 22) eine Meßeinrichtung (35) vorgesehen ist, die zumindest bei fast im Schließzustand befindlichem Artikulator (3) mißt, wie weit der bewegliche Artikulatorteil (23) aus seiner dem genauen Schließzustand des Artikulators (3) entsprechenden Lage entfernt ist.

8. Artikulator nach Anspruch 7, dadurch gekennzeichnet, daß die Halteplatte (26) des beweglichen Artikulatorteils (23) als ein Plattenstreifen ausgebildet ist, der längs einem etwa ovalen Linienzug verläuft, welcher dem Verlauf des Kieferkamms des Arbeitsmodells (2) folgt, das sich auf der Halteplatte (25) des feststehenden Artikulatorteils (21) befindet.

9. Artikulator nach Anspruch 7 oder 8, dadurch gekennzeichnet, daß die Retentionen der Halteplatte (26) des beweglichen Artikulatorteils (23) durch Löcher (34) in der Halteplatte (26) gebildet sind.

10. Artikulator nach einem der Ansprüche 7 bis 9, dadurch gekennzeichnet, daß die Meßeinrichtung (35) am beweglichen Artikulatorteil (23) höheneinstellbar angeordnet ist und einen am feststehenden Artikulatorteil (21) abgestützten Meßfühler (36) sowie eine im Schließzustand des Artikulators (3) auf Null einstellbare Meßwertskala (37) aufweist.

11. Artikulator nach Anspruch 10, dadurch gekennzeichnet, daß die Meßeinrichtung (35) als Meßuhr ausgebildet ist, wobei die Meßskala (37) der Meßuhr drehbar und unabhängig von der Stellung des Meßfühlers (38) der Meßuhr einstellbar ist.

12. Artikulator nach Anspruch 10 oder 11, dadurch gekennzeichnet, daß die Meßeinrichtung (35) an einem den Anschlag (24) bildenden Schaft (39) angeordnet und der Schaft (39) höheneinstellbar am beweglichen Artikulatorteil (23) gehalten ist.

13. Kauschablone zur Durchführung des Verfahrens nach den Ansprüchen 1 bis 3, gekennzeichnet durch eine Platte aus plastisch formbarem Werkstoff mit einem im wesentlichen ebenen dünnwandigen Plattenstreifen (14), der in einer etwa ovalen Linienführung verläuft, die dem Kieferkamm im Munde des Patienten folgt, und mit einem aus der Ebene des Plattenstreifens (14) herausgewölbtem Plattenteil (15), der längs des Plattenstreifens (14) an dessen konkav verlaufenden Innenrand (16) angeschlossen ist und größere Wandstärke als der Plattenstreifen (14) aufweist.

14. Kauschablone nach Anspruch 13, dadurch gekennzeichnet, daß der Plattenstreifen (14) in seinem Scheitelbereich eine am äußeren konvexen Streifenrand (19) sitzende und vom Plattenstreifen (14) etwa in seiner Ebene abstehende Zunge (18) zum Greifen der Kauschablone (8) trägt.

## Claims

1. A process for the production of a dental prosthesis such as a crown or a bridge, wherein a working model (2) is produced by means of an impression in the mouth, the working model - after conventional grinding operations on post teeth (1) - representing the current situation of the jaw (4) to be fitted with the dental prosthesis, and wherein a modelling of the dental prosthesis is formed on the working model (2) and the occlusal surfaces related to the mastication plane are formed on the modelling by means of an articulator (3) which accommodates the working model (2), characterised in that a relief model is formed by moulding in the mouth while performing mastication movements, the relief model having mastication motion surfaces (11) which are related to the jaw (4) to be fitted with the dental prosthesis and which represent the pattern of the mastication motions performed by the teeth of the other jaw (5) - which teeth are disposed opposite at least the dental prosthesis - , which mastication motions correspond to the closing bite situations, including the central bite and the bite variants such as protrusion, retrusion, laterotrusion and/or mediotrusion, that said relief model (8, 17, 20) is inserted in the condition of being fitted together with the working model (2) into the articulator (3), that when the articulator (3) is in the closed condition a counter-body (33) which casts the mastication motion surfaces (11) of the relief model (8, 17, 20) is fixedly cast with a moulding material which hardens without expansion and contraction on the movable articulator member which is disposed opposite the working and the relief model, and that after removal of the relief model the physiological occlusal surfaces are formed on the modelling of the dental prosthesis vertically and laterally in relation to the mastication motion surfaces (11') moulded on the counter-body (33) in the position of the counter-body (33) corresponding to the closed condition of the articulator (3).

2. A process according to claim 1 characterised in that, to produce the relief model, a mastication template (8) of material such as wax which is plastically deformable into the closing bite situations by the rows of teeth (6, 7) of the patient is inserted between the rows of teeth and fixed to the jaw (4) corresponding to the working model (2), that then the teeth of the jaw (4) corresponding to the working model (2) are impressed into the mastication template (8) by the mastication movements of the patient and the mastication motion surfaces (11) of the matication motions of the teeth of the other jaw (5) are formed therein, and that for bringing together the relief model produced in that way and the working model (2) the mastication template (8) with the impressions (10) originating from the teeth of the jaw (4) corresponding to the working model (2) is fitted on to the teeth of the working model (2).

3. A process according to claim 2 characterised in that the mastication template (8) is supported by a stop (13) against the ridge of the jaw or the post tooth in the moulding operation by virtue of the mastication movements in the mouth of the patient at the location of the dental prosthesis to be produced so that it cannot bend under the biting forces into the gap in the teeth which is to be closed by the dental prosthesis.

4. A process according to claim 1 characterised in that to produce the relief model firstly a bridge frame (17) for the dental prosthesis is produced, on which the bridge and crown portions (20) to be added are built up from mouldable building material with a slightly excess height in relation to the mastication plane, that then in a test fitment of the frame on the jaw (4) the correct mastication motion surfaces in the mastication plane are shaped by mastication movements of the patient in the building material of the bridge and crown portions (20) and that to fit together the relief model produced in that way and the working model (2) the bridge frame (17) with the bridge and crown portions (20) built up thereon is fitted into the working model (2).

5. A process according to one of claims 1 to 4 characterised in that to form the physiological occlusal surfaces on the modelling in relation to the mastication motion surfaces (11') which are moulded on the counter-body (33) a bridge frame which is produced for the dental prosthesis is fitted into the working model (2) in the articulator (3), that, when the articulator is open, a mouldable material is applied to the bridge frame and then by closure of the articulator (3) the counter-body (33) is impressed into the material by way of an interposed isolating means for preventing a bond and in that situation the mastication motion surfaces (11') which are formed on same are moulded correctly in the mastication plane in the material and that starting from said moulded mastication motion surfaces, with same being limited at the same time to the physiological occlusal surfaces, the modelling of the dental prosthesis is shaped from the material.

6. A process according to claim 5 characterised in that, when using a mouldable material which shrinks upon hardening such as a ceramic material which is made into a stiff paste and which sinters together when baked, the step of applying the mouldable material, the step of impressing the mastication motion surfaces (11') into the mouldable material and the further moulding of the mouldable material are each effected altogether in a plurality of successive working processes and a respective hardening process is effected between each of said working processes, wherein in the individual working processes the mouldable material is applied in layers to the respectively precedingly already hardened material.

7. An articulator for carrying out the process according to claims 1 to 6 comprising a stationary articulator member (21) which receives the working model (2) in an accurately reproducible position and a movable articulator member (23) which is connected to the stationary articulator member by way of an articulator pivot (22), and an abutment (24) which in the closed condition of the articulator (3) limits the motion of the movable articulator member (23) and accurately fixes the mutual position of the two articulator members (21, 23) relative to each other, and a respective holding plate (25, 26) on each of the two articulator members (21, 23), characterised in that the holding plate (26) is arranged adjustably in respect of height on the movable articulator member (23) and has retention means for anchorage of the counter-body (33) which is cast on to the holding plate (26), and that provided between the two articulator members (21, 22) is a measuring means (35) which, at least when the articulator (3) is almost in the closed condition, measures how far the movable articulator member (23) is remote from its position corresponding to the precise closed condition of the articulator (3).

8. An articulator according to claim 7 characterised in that the holding plate (26) of the movable articulator member (23) is in the form of a plate strip which extends along a substantially oval line which follows the configuration of the ridge of the jaw of the working model (2) which is disposed on the holding plate (25) of the stationary articulator member (21).

9. An articulator according to claim 7 or claim 8 characterised in that the retention means of the holding plate (26) of the movable articulator member (23) are formed by holes (34) in the holding plate (26).

10. An articulator according to one of claims 7 to 9 characterised in that the measuring means (35) is arranged adjustably in respect of height on the movable articulator member (23) and has a measuring feeler (36) which is supported on the stationary articulator member (21) and a measurement value scale (37) which can be set to zero in the closed condition of the articulator (3).

11. An articulator according to claim 10 characterised in that the measuring means (35) is in the form of a dial gauge, wherein the measurement scale (37) of the dial gauge is rotatable and settable independently of the position of the measuring feeler (38) of the dial gauge.

12. An articulator according to claim 10 or claim 11 characterised in that the measuring means (35) is arranged on a shaft (39) forming the abutment (24) and the shaft (39) is held adjustably in respect of height on the movable articulator member (23).

13. A mastication template for carrying out the process according to claims 1 to 3 characterised by a plate of plastically deformable material having a substantially flat thin-walled plate strip (14) which extends in a substantially oval line which follows the ridge of the jaw in the mouth of the patient, and a plate portion (15) which is curved out of the plane of the plate strip (14) and which is connected along the plate strip (14) to its concavely extending inside edge (16) and is of greater wall thickness than the plate strip (14).

14. A mastication template according to claim 13 characterised in that in its apex region the plate strip (14) carries a tongue (18) which is disposed at the outer convex strip edge (19) and which projects from the plate strip (14) approximately in its plane, for gripping the mastication template (8).

## Revendications

1. Procédé pour fabriquer une prothèse dentaire, telle qu'une couronne ou un bridge, selon lequel on établit, au moyen d'une empreinte dans la bouche, un modèle de travail (2), qui - après des travaux de meulage sur des moignons de dents (1) - représente la situation actuelle de la mâchoire (4) devant être pourvue de la prothèse dentaire, et selon lequel sur le modelage de travail (2), on réalise un modèle de la prothèse dentaire et on forme les surfaces occlusales rapportées au plan de mastication, sur le modelage à l'aide d'un articulateur (3) recevant le modèle de travail (2), caractérisé en ce que grâce au moulage dans la bouche moyennant l'exécution de mouvements de mastication, on forme un modèle en relief comportant des surfaces de trajets de mastication (11), qui sont associés à la mâchoire (4) qui doit être équipée de la prothèse dentaire, et qui représentent le modèle des trajets de mastication suivi par les dents de l'autre mâchoire (5) - qui sont situées en vis-à-vis au moins de la prothèse dentaire - et qui correspondent aux situations de serrage final des dents, moyennant la détection du coup de dent centré et des variantes des coups de dents, telles qu'une protrusion, une rétrusion, une latérotrusion et/ou une médiotrusion, qu'on insère ce modèle en relief (8,17,20), auquel est réuni le modèle de travail (2), dans l'articulateur (3), lorsque l'articulateur (3) est situé dans son état fermé en étant appliqué fermement contre la partie mobile de l'articulateur situé en vis-à-vis du modèle de travail et du modèle en relief, on coule le corps antagoniste (33) qui s'adapte à la forme des surfaces (11) des trajets de mastication du modèle en relief (8,17,20) en utilisant une masse de moulage qui durcit sans dilatation, ni contraction, et qu'après avoir retiré le modèle en relief, les surfaces occlusales physiologiques situées sur le modèle de la prothèse dentaire sont formées verticalement et latéralement en rapport avec les surfaces (11') des trajets de mastication, formés sur le corps antagoniste (33), dans la position du corps antagoniste (33), qui correspond à l'état fermé de l'articulateur (3).

2. Procédé selon la revendication 1, caractérisé en ce que pour l'établissement du modèle en relief, on insère entre les rangées de dents (6,7) du patient, un modèle à mastiquer (8) réalisé en un matériau déformable plastiquement par les rangées de dents jusque dans les conditions de serrage final, et on le fixe sur la mâchoire (4) qui correspond au modèle de travail (2), que les dents de la mâchoire (4) qui correspond au modèle de travail (2) s'enfoncent ensuite dans le modèle à mastiquer (8) sous l'effet des mouvements de masticage du patient et que les surfaces (11) des trajets de mastication des dents de l'autre mâchoire (5) sont formés, et que pour l'assemblage du modèle en relief ainsi obtenu et du modèle de travail (2), on met en place des empreintes (10), fournies par les dents de la mâchoire (4) qui correspond au modèle de travail (2), sur les dents du modèle de travail (2).

3. Procédé selon la revendication 2, caractérisé en ce que lors de la mise en forme sous l'effet des mouvements de mastication dans la bouche du patient, le modèle à mastiquer (8) est soutenu, dans la position de la prothèse dentaire devant être fabriquée, contre la rangée de dents ou le moignon de dent, au moyen d'une butée (13), de sorte que le modèle à mastiquer ne peut pas refluer, sous l'action des forces de serrage des dents dans le vide de mastication, qui doit être fermé par la prothèse dentaire.

4. Procédé selon la revendication 1, caractérisé en ce que pour fabriquer un modèle en relief, on forme tout d'abord une ossature de bridge (17) pour la prothèse dentaire, sur laquelle on forme les éléments de bridge et de couronne (20), qui doivent être complétés, avec une légère disposition en saillie par rapport au plan de mastication, en utilisant une masse de structuration déformable, puis, lors du test de l'ossature sur la mâchoire (4), les surfaces de déplacement lors de la mastication, qui sont correctes par rapport au plan de mastication, sont formées, sous l'effet de mouvements de mastication du patient, dans la masse structurelle des éléments de bridge et de couronne (20), et que pour l'assemblage du modèle en relief ainsi obtenu et du modèle de travail (2), on insère l'ossature (17) du bridge sur lequel sont placés les éléments de bridge et de couronne (20), dans le modèle de travail (2).

5. Procédé selon l'une des revendications 1 à 4, caractérisé en ce que pour former les surfaces occlusales physiologiques sur le modelage en rapport avec les surfaces (11') des trajets de mastication, formés sur le corps antagoniste (33), on insère une ossature de bridge, fabriquée pour la prothèse dentaire, dans le modèle de travail (2) situé dans l'articulateur (3), que, l'articulateur étant ouvert, on dispose une masse déformable sur l'ossature du bridge et qu'ensuite, sous l'effet de la fermeture de l'articulateur (3), le corps antagoniste (33) est enfoncé dans la masse par l'intermédiaire d'un moyen d'isolation intercalé, qui empêche l'établissement d'une liaison, et que l'empreinte des surfaces (11'), qui sont formées sur ce corps, est formée dans la masse, d'une manière correcte par rapport au plan de mastication, et qu'à partir de ces surfaces formées des trajets de mastication, on forme le modèle de la prothèse dentaire dans la masse, tout en limitant simultanément ces surfaces aux surfaces occlusales physiologiques.

6. Procédé selon la revendication 5, caractérisé en ce que, dans le cas d'une masse déformable, qui se rétracte en durcissant, comme par exemple une masse céramique qui est agencée sous la forme d'une pâte rigide et se solidifie par frittage lors de la cuisson, le dépôt de la masse déformable, la formation de l'empreinte des surfaces (11') des trajets de mastication dans la masse déformable et la poursuite de la déformation de la masse déformable sont réalisés respectivement au total selon plusieurs processus successifs de travail, et des processus de durcissement sont exécutés respectivement entre ces processus de travail, auquel cas la masse déformable est déposée sous la forme d'une couche sur la masse respectivement déjà durcie précédemment, lors des différents processus de travail.

7. Articulateur pour la mise en oeuvre du procédé selon les revendications 1 à 6, constitué par une partie fixe (21), qui reçoit le modèle de travail (2) dans une position reproductible de façon précise, et une partie mobile (23), qui est raccordée à la partie fixe par l'intermédiaire d'une articulation (21), ainsi que par une butée (24), qui, lorsque l'articulateur (3) est à l'état fermé, limite le trajet de la partie mobile (23) de l'articulateur et fixe de façon précise dans leur position réciproque, les deux parties (21, 23) de l'articulateur, et par les plaques de retenue respectives (25,26) situées sur les deux parties (21,23) de l'articulateur, caractérisé en ce que la plaque de retenue (26) située sur la partie mobile (23) de l'articulateur est montée de manière à être réglable en hauteur et comporte des éléments de retenue pour l'ancrage du corps antagoniste (33) coulé sur la plaque de retenue (26), et qu'entre deux parties (21,22) de l'articulateur il est prévu un dispositif de mesure (35), qui, au moins dans le cas où l'articulateur (3) est presque dans son état fermé, mesure la distance entre la partie mobile (23) de l'articulateur et sa position qui correspond à l'état fermé précis de l'articulateur (3).

8. Articulateur selon la revendication 7, caractérisé en ce que la plaque de retenue (26) de la partie mobile (23) de l'articulateur est réalisée sous la forme d'une plaque en forme de bande, qui s'étend le long d'un trajet approximativement ovale, qui suit le contour de la rangée de dents du modèle de travail (2), qui est situé sur la plaque de retenue (25) de la partie fixe (21) de l'articulateur.

9. Articulateur selon la revendication 7 ou 8, caractérisée en ce que les éléments de retenue de la plaque de retenue (26) de la partie mobile (23) de l'articulateur sont formés par des trous (34) ménagés dans la plaque de retenue (28).

10. Articulateur selon l'une des revendications 7 à 9, caractérisé en ce que le dispositif de mesure (35) est monté sur la partie mobile (23) de l'articulateur de manière à être réglable en hauteur et possède un capteur de mesure (36), qui est fixé sur la partie fixe (21) de l'articulateur, ainsi qu'une échelle de valeurs de mesure (37), qui est réglable sur zéro lorsque l'articulateur (3) est fermé.

11. Articulateur selon la revendication 10, caractérisé en ce que le dispositif de mesure (35) est réalisé sous la forme d'un cadran, l'échelle de mesure (37) du cadran pouvant tourner et étant réglable indépendamment de la position du capteur de mesure (38) du cadran.

12. Articulateur selon la revendication 10 ou 11, caractérisé en ce que le dispositif de mesure (35) est disposé sur une tige (39) formant la butée (24) et que la tige (39) est maintenue, de manière à être réglable en hauteur, sur la partie mobile (23) de l'articulateur.

13. Modèle à mastiquer pour la mise en oeuvre du procédé selon les revendications 1 à 3, caractérisé par une plaque réalisée en un matériau déformable plastiquement, comportant une plaque en forme de bande (14) à paroi mince, sensiblement plane, qui s'étend selon une configuration approximativement ovale qui suit la rangée de dents dans la bouche du patient, et un élément en forme de plaque (15), qui est coudé à partir du plan de la plaque en forme de bande (14), est raccordé, le long de la plaque en forme de bande (14), au bord intérieur concave (16) de cette plaque et possède une épaisseur de paroi supérieure à celle de la plaque en forme de bande (14).

14. Modèle à mastiquer selon la revendication 13, caractérisé en ce que la plaque en forme de bande (14) porte, dans sa partie sommitale, une languette (18), qui prend appui sur le bord extérieur convexe (19) de la plaque en forme de bande et qui fait saillie à partir de la plaque en forme de bande (14) approximativement dans le plan de cette plaque, de manière à permettre la préhension du modèle à mastiquer (8).
